# EUROPEAN PATENT APPLICATION

(11) **EP 0 880 213 A1**
(43) Date of publication of application: **25.11.1998**
(21) Application number: 98201639.6
(22) Date of filing: 18.05.1998
(51) Int. Cl.: H02H 1/06, H02H 3/33

(54) **Earth-leakage detection circuit**

(30) Priority: 21.05.1997 NL 1006104
(71) Applicant: Holec Holland N.V., 7550 AA Hengelo (NL)
(72) Inventor: Groeneboom, Maarten, 7468 BN Enter (NL); Niehoff, Ronaldus Hendrikus Maria, 7577 MB Oldenzaal (NL)
(74) Representative: de Bruijn, Leendert C.

(57) **Abstract**

Earth-leakage detection circuit, comprising an earth-leakage current converter for the emission of a current which is proportional to the earth-leakage current occurring in a circuit to be protected, a storage element connected thereto, a load connected in parallel with the storage element and a comparison circuit for comparing at least one part of the voltage occurring across the storage element with a first threshold value. The load is provided with a threshold-value circuit, all this in such a way that if the voltage across the storage element exceeds the first threshold value, a measurement is performed on the current proportional to the earth-leakage current.

## Description

The invention relates to an earth-leakage detection circuit, comprising an earth-leakage current converter for delivering a current which corresponds to the earth-leakage current occurring in a circuit to be protected, a storage element connected thereto, a load connected in parallel with the storage element and a comparison circuit for comparing at least one part of the voltage occurring across the storage element with a first threshold value. Such a circuit is disclosed in the published German Patent Application 3,807,935.

In the case of the earth-leakage switch disclosed in the abovementioned German Patent Application, a total current converter is used to detect an earth leakage and to generate a current which corresponds to the magnitude of the earth leakage and which is fed to a storage element in the form of a capacitor. Connected in parallel across said capacitor is a load which comprises a voltage divider for obtaining a partial voltage of the voltage developed across the capacitor, which partial voltage is compared with a reference voltage. In the case of an unacceptable leakage current, the partial voltage derived from the capacitor will exceed the reference voltage, with the result that a trip mechanism is triggered, by means of which the circuit in which the earth leakage occurs is switched off.

This known earth-leakage detection circuit has the disadvantage that, during the charging of the capacitor, the load formed by the voltage divider already absorbs current, as a result of which the charging of the capacitor is delayed and energy will be lost.

The object of the invention is to provide an earth-leakage detection circuit of the type mentioned in the introduction in which the disadvantage mentioned is avoided.

This object is achieved according to the invention in that the load is provided with a threshold-value circuit, all this in such a way that, if the voltage across the storage element exceeds the first threshold value, a measurement is performed on the current proportional to the earth-leakage current.

This achieves the result that the storage element is charged virtually without delay and a current measurement is performed only after the threshold value has been exceeded and energy is consumed. A trip mechanism responds if the current measurement reveals that the earth-leakage current is too high. According to the invention a voltage threshold is therefore used for the charged state of the capacitor and a current threshold can be used for the magnitude of the earth-leakage current. This provides an accurate earth-leakage detection. In the known circuit, only one current threshold is used.

It is pointed out that the published European Patent Application 0 702 445 discloses an earth-leakage switch in which the storage element is given a high-resistance load by means of a transistor structure. Said transistor structure ensures that the charging of the storage element is disadvantageously influenced as little as possible.

The operation of said earth-leakage switch is based on the measurement of the voltage across the capacitor which is charged by the earth-leakage current and which, for a constant earth-leakage current, carries an increasing voltage. In this case, the trip mechanism of the earth-leakage switch is therefore triggered at a certain voltage across the capacitor. Said voltage is, however, not an explicit measure of the leakage current.

The storage element designed as a capacitor acts as an integrator so that said known earth-leakage switch has the disadvantage that, even in the case of low earth-leakage currents, an incorrect earth-leakage detection will occur after the elapse of a certain integration time. This disadvantage is the consequence of the use of only one threshold, namely the voltage threshold. A voltage across the capacitor derived from the leakage current is compared with said threshold. The disadvantage mentioned is not encountered in the case of the earth-leakage detection circuit according to the invention because a voltage threshold value is used for the capacitor voltage and only after the voltage threshold has been reached by the capacitor and sufficient energy is therefore stored in the capacitor is a current measurement carried out.

In an embodiment of the invention preferably to be used, the load is formed by a series circuit of a resistor and a reference element and the voltage across the resistor, which is proportional to the earth-leakage current, is compared with a second threshold value.

As a particularly advantageous alternative, the first and second threshold values can be derived from the same reference element.

The invention will be explained in greater detail below by reference to the drawings.
Figure 1 shows a block diagram of an embodiment of the invention;
Figure 2 shows a simplified circuit diagram of an embodiment of the invention;
Figure 3 is a diagram of another embodiment of the invention; and
Figure 4 is a diagram of an alternative embodiment of the invention.

The earth-leakage detection circuit according to the invention can be used in voltage-independent electronic earth-leakage switches, often also referred to as leakage-current-fed electronic earth-leakage switches. The object of earth-leakage switches is to interrupt the energy supply to a circuit if an earth-leakage current occurring in the circuit exceeds a certain critical upper limit (for example 30 mA). This switch must not, however, respond at an earth-leakage current below a certain lower limit (for example 15 mA).

Moreover, earth-leakage switches are often required to function well in a temperature range from -25°C to +60°C.

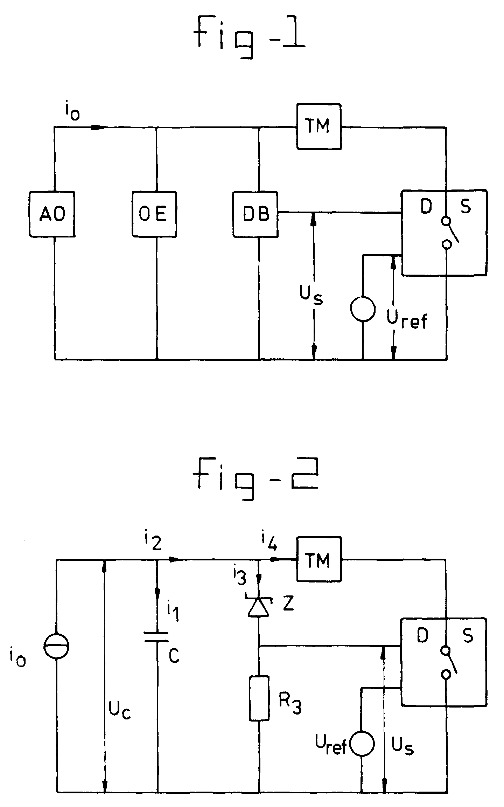

In the earth-leakage detection circuit shown in Figure 1, an earth-leakage current is measured in an earth-leakage current converter AO, which earth-leakage current converter emits a signal, in particular a current iₒ, which is proportional to the magnitude of the measured earth-leakage current. Connected across the earth-leakage current converter is a storage element OE, for example a capacitor, which is charged by means of the signal (current) emitted by the earth-leakage current converter.

An example of an earth-leakage current converter is disclosed in the abovementioned German Patent Application 3,807,935 and comprises a current transformer by means of which a current measurement is performed on the current fed to a circuit and removed from it, which circuit has to be protected by an earth-leakage switch. In the known earth-leakage switch, the earth-leakage current converter comprises, moreover, a rectifier connected to the current transformer optionally having an overvoltage protection. The current originating from the rectifier is proportional to the measured earth-leakage current and is fed to the storage element OE, which is formed in the known earth-leakage switch by a capacitor having a resistor connected in series with it. The current proportional to the measured earth-leakage current is comparable to a current iₒ from AO in Figure 1.

From Figure 1, it is evident that a load DB is connected in parallel with the storage element OE, which load is provided with a threshold-value circuit.

At least a part of the voltage Us occurring across the load, which is a measure of the current iₒ. is fed to a detection and switching circuit DS. Said voltage Us is compared with a reference voltage Uref by the detection and switching circuit DS. The detection and switching circuit DS controls a trip mechanism TM, which triggers in turn the interruption of the circuit to be protected.

If an earth-leakage current occurs in the circuit to be protected, the storage element OE is charged. Because the load DB is provided with a threshold-value circuit, a current will only flow through said load if the voltage across the storage element has exceeded a predetermined threshold value. The threshold value will be exceeded if the voltage across the storage element OE has a value which is sufficient to deliver energy during a current measurement with current threshold at the current iₒ proportional to the earth-leakage current and to trigger a trip mechanism. The threshold-value circuit can be formed by a circuit having a threshold-value, such as a semiconductor circuit, for example a transistor which is turned on at the predetermined threshold value of the voltage across the storage element or a so-called "bandgap device" circuit.

If the earth-leakage current has reached the critical upper limit, the voltage Us which is delivered by the load DB and which is a measure of the current iₒ will exceed the reference voltage Uref, as a result of which the detection and switching circuit is activated, which triggers in turn the trip mechanism. The use of the threshold-value circuit achieves the result that the load only loads the storage element after the threshold value has been reached so that the charging will scarcely be delayed and virtually no energy will be lost.

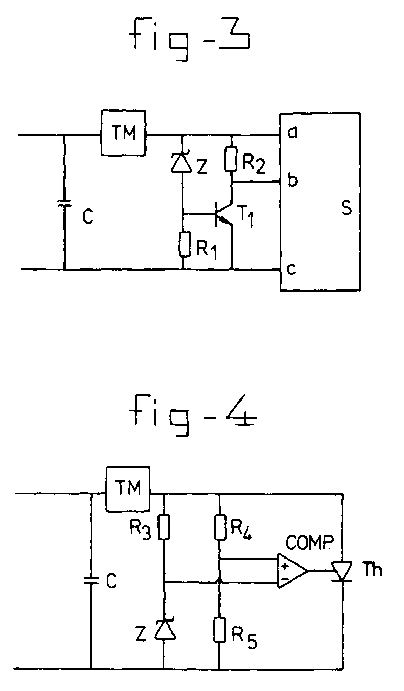

Figure 2 shows a particularly simple embodiment of the invention. In Figure 2, the earth-leakage current converter is diagrammatically represented by a current source iₒ. The storage element is formed by the capacitor C, while the load with the threshold-value circuit is formed by the series connection of the resistor R3 and the Zener diode Z. The remaining section corresponds to that in Figure 1.

If an earth leakage occurs in the circuit to be protected, the earth-leakage current converter emits a signal iₒ which is proportional to the earth-leakage current occurring in the circuit. The capacitor C is charged by means of the current i₁, which current is for the time being equal to the current iₒ because the current i₄ is initially zero because switching had not been carried out and the current i₃ is also zero, with the result that the current i₂ is also zero. As soon as the voltage across the capacitor C has reached the Zener voltage of the Zener diode Z, a current i₃ starts to flow. Prior to this moment, the capacitor C is charged entirely by iₒ without a load being present across the capacitor C. As a result, no energy loss occurs, the result also being achieved that the capacitor C is charged very rapidly with virtually no delay.

After time has elapsed, the capacitor is charged and i₃ has become equal to iₒ. The voltage Us at the tapping point of the Zener diode Z and the resistor R₃, which is a measure of the current i₃ and therefore of the current iₒ and the earth-leakage current, is compared with the reference voltage Uref and, if the earth-leakage current exceeds a predetermined upper limit (for example 30 mA) Us becomes > Uref, with the result that the detection and switching circuit short-circuits the coil of the trip mechanism TM across the capacitor C. A voltage threshold Z is therefore used first and then a current threshold Uref, as a result of which an accurate and rapid detection of an earth leakage is achieved. The circuit according to the invention has the advantages that, at fairly low leakage currents below the upper limit, no tripping of the earth-leakage switch will occur and that all the energy from the earth-leakage current is utilized to charge the capacitor to a suitable voltage, with the result that a scarcely delayed switching is also achieved.

In a further development of the invention, the Zener voltage is also used as reference voltage.

Figure 3 shows such a development. The series circuit of the trip mechanism TM, the Zener diode Z and the resistor R₁ is connected across the capacitor C. This arrangement of the trip mechanism, which differs from Figure 1, often has wiring advantages, but the position of the mechanism does not detract from the satisfactory operation of the earth-leakage detection circuit.

The circuit acts as a shunt stabilizer. The voltage across the storage capacitor C is fed via a reference element (shown here as Zener diode Z) to the base of transistor T₁. Up to the instant when the latter becomes conducting, the leakage current is used solely to charge the capacitor. Virtually all the leakage current then flows in the resistor R₂. The voltage across R₂ is therefore a direct measure of the current. The voltage (a - b) concerned is compared in the circuit S with a part of the stabilized voltage (a - c). If the threshold value is reached, S becomes conducting, as a result of which the trip system TM is energized.

Figure 4 shows another alternative in which the Zener diode is used as voltage threshold and as current threshold. The trip mechanism is connected in the same way as in Figure 3. The resistor R₃ and the Zener diode Z, on the one hand, and the resistors R₄ and R₅ form the branches of a bridge. The resistor R₄ has a low value and the resistor R₅ has a high value, the series connection of the resistors R₄ and R₅ being very high-resistance. Connected across the connecting point of the resistor R₃ and the Zener diode Z and the connecting point of the resistors R₄ and R₅ is a comparator COMP, whose output triggers the thyristor Th.

## Claims

1. Earth-leakage detection circuit, comprising an earth-leakage current converter for delivering a current which is proportional to the earth-leakage current occurring in a circuit to be protected, a storage element connected thereto, a load connected in parallel with the storage element and a comparison circuit for comparing at least one part of the voltage occurring across the storage element with a first threshold value, characterized in that the load is provided with a threshold-value circuit, all this in such a way that, if the voltage across the storage element exceeds the first threshold value, a measurement is performed on the current proportional to the earth-leakage current.

2. Earth-leakage detection circuit according to Claim 1, characterized in that the load is formed by a series connection of a resistor and a reference element and the voltage across the resistor, which is proportional to the earth-leakage current, is compared with a second threshold value.

3. Earth-leakage detection circuit according to Claim 2, characterized in that the first and second threshold values are derived from the same reference element.
